# EUROPÄISCHE PATENTSCHRIFT

(11) **EP 4 177 663 B1**
(45) Veröffentlichungstag und Bekanntmachung des Hinweises auf die Patenterteilung: **22.10.2025**
(21) Anmeldenummer: 22206205.1
(22) Anmeldetag: 08.11.2022
(51) Int. Cl.: G02B 21/36

(54) **VERFAHREN, VORRICHTUNG UND SOFTWAREPROGRAMM ZUR AUFLÖSUNGSSTEIGERUNG IN DER MIKROSKOPIE**
METHOD, DEVICE AND SOFTWARE PROGRAM FOR INCREASING THE RESOLUTION IN MICROSCOPY
PROCÉDÉ, DISPOSITIF ET PROGRAMME LOGICIEL POUR AUGMENTER LA RÉSOLUTION EN MICROSCOPIE

(30) Priorität: 09.11.2021 DE 102021129159
(43) Veröffentlichungstag der Anmeldung: 10.05.2023
(73) Patentinhaber: Carl Zeiss Microscopy GmbH, 07745 Jena (DE)
(72) Erfinder: NOVIKAU, Yauheni, 99510 Apolda (DE); KUDRYAVTSEV, Volodymyr, 07751 Jena (DE); KALININ, Stanislav, 99427 Weimar (DE)
(74) Vertreter: Patentanwälte Geyer, Fehners & Partner mbB

(56) Entgegenhaltungen:
- SCHAEFER L H ET AL: "Generalized approach for accelerated maximum likelihood based image restoration applied to three-dimensional fluorescence microscopy", JOURNAL OF MICROSCOPY, BLACKWELL SCIENCE, GB, vol. 204, no. Pt 2, 1 November 2001 (2001-11-01), pages 99 - 107, XP002291318, ISSN: 0022-2720, DOI: 10.1046/J.1365-2818.2001.00949.X
- BIGGS DAVID S. C. ET AL: "Acceleration of iterative image restoration algorithms", APPLIED OPTICS, vol. 36, no. 8, 10 March 1997 (1997-03-10), US, pages 1766, XP093030687, ISSN: 0003-6935, DOI: 10.1364/AO.36.001766
- P. SARDER ET AL: "Deconvolution methods for 3-D fluorescence microscopy images", IEEE SIGNAL PROCESSING MAGAZINE, vol. 23, no. 3, 1 May 2006 (2006-05-01), pages 32 - 45, XP055004885, ISSN: 1053-5888, DOI: 10.1109/MSP.2006.1628876
- WANG HONGBIN ET AL: "Scaled Heavy-Ball Acceleration of the Richardson-Lucy Algorithm for 3D Microscopy Image Restoration", IEEE TRANSACTIONS ON IMAGE PROCESSING, IEEE, USA, vol. 23, no. 2, 1 February 2014 (2014-02-01), pages 848 - 854, XP011536810, ISSN: 1057-7149, [retrieved on 20140108], DOI: 10.1109/TIP.2013.2291324
- HOLMES TIMOTHY J. ET AL: "Acceleration of maximum-likelihood image restoration for fluorescence microscopy and other noncoherent imagery", JOURNAL OF THE OPTICAL SOCIETY OF AMERICA A, vol. 8, no. 6, 1 June 1991 (1991-06-01), pages 893, XP093034092, ISSN: 1084-7529, DOI: 10.1364/JOSAA.8.000893
- LANTERI H ET AL: "A general method to devise maximum-likelihood signal restoration multiplicative algorithms with non-negativity constraints", SIGNAL PROCESSING, ELSEVIER, AMSTERDAM, NL, vol. 81, no. 5, 1 May 2001 (2001-05-01), pages 945 - 974, XP004239257, ISSN: 0165-1684, DOI: 10.1016/S0165-1684(00)00275-9

## Beschreibung

Die Erfindung betrifft ein Verfahren, eine Vorrichtung und ein Softwareprogramm zur Auflösungssteigerung in der Mikroskopie, insbesondere der Fluoreszenzmikroskopie, wobei eine Bildverbesserung mit einem Iterationsprozess zur Anwendung kommt. Das Verfahren umfasst dabei die folgenden Schritte: Bereitstellen mind. eines aufgenommenen Probenbildes, das mit einem Mikroskop erzeugt wurde, Bereitstellen einer Punktbildverwaschungsfunktion, die ein Abbildungsverhalten des Mikroskops kennzeichnet, und Berechnen eines auflösungsgesteigerten Probenbildes aus dem aufgenommenen Probenbild, wobei das Berechnen in einem eine Iterationsschleife wiederholt durchlaufenden Iterationsprozess erfolgt, der aus dem aufgenommenen Probenbild unter Verwendung der Punktbildverwaschungsfunktion ein Korrekturbild ermittelt, wobei im Iterationsprozess ein Unterschied zwischen dem mit der Punktbildverwaschungsfunktion gefalteten Korrekturbild und dem aufgenommenen Probenbild minimiert wird.

In der modernen Mikroskopie, insbesondere der Weitfeld-Fluoreszenzmikroskopie, ist es längerem bekannt, dass durch eine Bildbearbeitung die Auflösung gegenüber der Abbildung, die mit dem Mikroskop erreicht werden kann, gesteigert werden kann. Die Abbildungsleistung des Mikroskops ist durch optische Gesetzgebungen, insbesondere das Abbesche-Beugungskriterium sowie weitere Rauschprozesse bei der Bildaufnahme, bzw. in Detektoren etc., begrenzt. Verschiedene Bildbearbeitungsverfahren erlauben es, die Auflösung im Bild dennoch zu steigern und aus dem ursprünglichen Probenbild das auflösungsgesteigerte Probenbild zu ermitteln. Von besonderem Interesse, weil besonders leistungsfähig sind hierbei maximum-likelihood-basierte, iterativ arbeitende Algorithmen. Sie setzen sämtlich an der Erkenntnis an, dass die Punktbildverwaschungsfunktion eine wesentliche Charakterisierung des Mikroskops ist. Diese beschreibt, wie das Bild eines punktförmigen Emitters auf dem Detektor nicht mehr punktförmig wahrgenommen wird, sondern üblicherweise als Scheibchen. Die auflösungsreduzierenden Eigenschaften des Mikroskops werden deshalb gemeinhin durch die Punktbildverwaschungsfunktion (Englisch point spread function, abgekürzt PSF) beschrieben. Bei einem üblichen Weitfeld-Mikroskop ist die PSF in Form eines Doppelkonus ausgebildet, der ähnlich einer Sanduhr erscheint und seine engste Taille in der Fokalebene hat sowie sich senkrecht dazu entlang der optischen Achse des Mikroskops erstreckt.

Mathematisch gesehen ist die Abbildung im Mikroskop eine Faltung der Intensitätsverteilung, beispielsweise eines Fluoreszenzfarbstoffs, in der Probe mit der Punktbildverwaschungsfunktion. Zusätzlich tritt ein Hintergrundpegel hinzu und das erhaltene Ergebnis ist gemäß einer vom Mikroskop abhängigen Rauschfunktion verrauscht. Diese Prozesse bewirken zusammen dann das wahrgenommene Bild, welches eine geringere Auflösung gegenüber der ursprünglichen Intensitätsverteilung in der Probe hat. Die Auflösungssteigerung wird dadurch erreicht, dass diese Prozesse rückgerechnet werden. Dies wird in der Literatur als Entfaltung bzw. Deconvolution bezeichnet. Eine exakte analytische Rückrechnung ist jedoch nicht möglich, da aus dem verrauschten Bild aufgrund der statistischen Natur der zusammenwirkenden Prozesse nicht einfach auf die originale Intensitätsverteilung in der Probe rückgeschlossen werden kann. Prozesse zu Bildverbesserungen sind bekannt. Es sei insbesondere auf den sogenannten Richardson-Lucy-Algorithmus verwiesen, der bereits in den 1970er-Jahren entwickelt wurde. Dieser, im Folgenden als RL-Algorithmus bezeichnete Ansatz ermittelt iterativ das Korrekturbild so, dass eine Faltung des Korrekturbildes mit der Punktbildverwaschungsfunktion und unter Berücksichtigung von Rauschprozessen dem durch das Mikroskop erhaltenen, aufgenommenen Probenbild möglichst gleicht. Das Korrekturbild wird in jedem Durchlauf durch die den Iterationsprozess kennzeichnenden Iterationsschleife nach und nach verbessert, d.h. der Unterschied zwischen dem mit der Punktbildverwaschungsfunktion gefalteten und verrauschten Korrekturbild und dem aufgenommenen Probenbild nimmt mehr und mehr ab. Als Optimierung, d. h. zur Quantifizierung wird in den Originalpublikationen das Kriterium der maximum likelihood verwendet. Dieses Vorgehen hat jedoch den Nachteil, dass eine sehr große Anzahl an Durchläufen, nämlich 1000 Iterationsdurchläufe oder mehr, erforderlich ist.

Im Stand der Technik wurden deshalb iterativ beschleunigte Verfahren entwickelt, die den RL-Algorithmus weiterbilden. Es sei hierzu auf die Veröffentlichungen von L. Schaefer et al., Journal of Microscopy, Vol. 204, Pt. 2, November 2001, S. 99-107 sowie auf die Veröffentlichung D. Biggs und M. Andrews, Applied Optics, Vol. 36, No. 6, März 1997, S. 1766-1775, und weiter auf M. Ingaramo et al., PhysChem, Vol. 15, 2014, S. 794-800 verwiesen. Auf derartige beschleunigte Verfahren, die eine Optimierung nach bestimmten Kriterien, z. B. maximum likelihood oder Entropie, vornehmen, baut die Erfindung auf. Die Veröffentlichung von Schaefer et al. schlägt vor, eine Methode der konjugierten Gradienten auszuführen, um in einem RL-Algorithmus iterativ schneller dasjenige Korrekturbild zu finden, das, wenn gefaltet mit der Punktbildverwaschungsfunktion, und unter Berücksichtigung von Rauschprozessen, wie beispielsweise Poisson-Rauschen oder Gauss-Rauschen, möglichst dem aufgenommenen Probenbild entspricht. Dabei werden ein Gradientenvektor und eine Hesse'sche Matrix, die eine Gradientenvektorlänge definiert, in jedem Durchlauf berechnet. Die Gradientenvektorberechnung und auch die Matrixauswertung erfordert mehrere Faltungsoperationen mit der Punktbildverwaschungsfunktion.

Die Veröffentlichung von Biggs und Andrews führt für ein gemäß RL-Algorithmus erhaltenes Korrekturbild eine Extrapolation durch, welche die Änderung, die im vorherigen Durchlauf zum aktuellen Korrekturbild führte, über eine gewisse Extrapolationsweite fortschreibt. Die Extrapolationsreichweite basiert im Algorithmus von Biggs und Andrews auf einem Schrittweitenfaktor der größer 0 und kleiner 1 ist. Mit diesem Faktor wird in einem Schätzschritt die Änderung, die im vorherigen Durchlauf zum aktuellen Korrekturbild führte, fortgeschrieben. Der Schrittweitenfaktor bezeichnet den Anteil, um den die vorherige Änderung extrapoliert wird. Dieser Faktor wird über Summationen von vorherigen Korrekturbildern berechnet, benötigt also vorherige Korrekturbilddaten, die gespeichert werden müssen und auf Faltungen mit der Punktbildverwaschungsfunktion beruhen. Das geschätzte Korrekturbild ist die Basis für die Berechnung des nächsten Korrekturbildes gemäß RL-Algorithmus. Bei dieser Berechnung findet dann eine Faltung statt, wobei die Punktbildverwaschungsfunktion eingeht. Das Verfahren ist durch die Schätzschritte beschleunigt.

P. Sarder und A. Nehorai, "Deconvolution methods for 3-D fluorescence microscopy images", IEEE Signal Processing Magazine, 2006-05-01, Bd. 23, Nr. 3, Seiten 32-45, befassen sich mit Aspekten der Entfaltung in der 3D-Fluoreszenzmikroskopie. H. Wang und P. Miller, "Scaled Heavy-Ball Acceleration of the Richardson-Lucy Algorithm for 3D Microscopy Image Restoration", IEEE Transactions on Image Processing, 2014-02-01, Bd. 23, Nr. 2, Seiten 848-854, schildern einen beschleunigten Lucy-Richardson-Algorithmus. H. Lanteri et al., "A general method to devise maximum-likelihood signal restoration multiplicative algorithms with non-negativity constraints", Signal Processing, 2001-05-01, Bd. 81, Nr. 5, Seiten 945-974, und T. Holmes und L.-H. Liu , "Acceleration of maximum-likelihood image restoration for fluorescence microscopy and other noncoherent imagery", Journal of the Optical Society of America A, 1991-06-01, Bd. 8, Nr. 6, Seite 893, betreffen Bildrekonstruktionen auf Basis der maximum-likelihood-Schätzung.

Der Stand der Technik erreicht damit eine Verfahrensbeschleunigung, da die Zahl der notwendigen Durchläufe reduziert wird, benötigt aber dafür relativ aufwendige Berechnungen und Bildspeicherungen. Dennoch ist insgesamt mit diesen Ansätzen die Berechnung drastisch beschleunigt, da die Zahl der Durchläufe mindestens halbiert ist.

Der Erfindung liegt gegenüber diesem Stand der Technik die Aufgabe zugrunde, die Berechnung des auflösungsgesteigerten Probenbildes weiter zu beschleunigen.

Die Erfindung ist in den Ansprüchen 1, 8 und 9 gekennzeichnet. Die abhängigen Ansprüche betreffen bevorzugte Weiterbildungen.

Im Verfahren zur Auflösungssteigerung wird ein aufgenommenes Probenbild bereitgestellt, das mit einem Mikroskop erzeugt wurde. Es handelt sich hierbei bevorzugt um ein Fluoreszenzbild, das weiter optional als Weitbild aufgenommen wurde. Weiter wird die Punktbildverwaschungsfunktion bereitgestellt, die, wie erwähnt, das Abbildungsverhalten des Mikroskops kennzeichnet. Auf dieser Basis wird ein auflösungsgesteigertes Probenbild aus dem aufgenommenen Probenbild berechnet, wobei ein Iterationsprozess ausgeführt wird, der aus dem aufgenommenen Probenbild unter Verwendung der Punktbildverwaschungsfunktion ein Korrekturbild ermittelt. Aufgrund der iterativen Eigenschaft wird dieses Korrekturbild bei jedem Durchlauf durch die Iterationsschleife verbessert, bevorzugt maximum likelihood-basiert.

In diesem Zusammenhang ist es von Bedeutung, dass die Auflösung eines Mikroskops nicht automatisch der Zahl der Bildpixel des verwendeten Detektors entspricht. Unter Auflösung wird vielmehr im optischen Sinne der Abstand zweier Punkte verstanden, die im Probenbild gerade noch unterschieden werden können. Auch eine beliebige Erhöhung der Pixelanzahl auf Seiten des Detektors würde an diesem Maß nichts ändern. Dennoch ist es für die optimale nachträgliche Auflösungserhöhung mit den hier beschriebenen Verfahren natürlich von Vorteil, wenn ein Detektor verwendet wird, welcher mindestens eine doppelte Abtastung gemäß dem Nyquist-Theorem realisiert.

Der Iterationsprozess minimiert über die Durchläufe durch die Iterationsschleife hinweg einen Unterschied zwischen dem aufgenommenen Probenbild und dem Korrekturbild, wenn dies mit der Punktbildverwaschungsfunktion gefaltet und gegebenenfalls um Rauschterme erweitert ist. Der Iterationsprozess umfasst eine Vielzahl von Durchläufen durch die Iterationsschleife, wobei jeder Durchlauf mit einer Durchlaufnummer fortlaufend, d. h. im Sinne eines Zählindexes, nummeriert ist. Ein in der Iterationsschleife verwendeter Schrittweitenfaktor hängt nun von der Durchlaufnummer des jeweiligen Durchlaufs ab. Der Schrittweitenfaktor wird in der Iterationsschleife mit einer Änderung multipliziert, die im Iterationsprozess früher und unter Auswertung eines früher ermittelten Korrekturbildes oder einer früher dazu berechneten Größe erreicht wurde. Der Schrittweitenfaktor definiert eine Festschreibung, zu welchem Anteil eine unter Auswertung des Korrekturbildes ermittelte Änderung des Korrekturbildes oder der Größe fortgeschrieben wird. Es ist zur Ermittlung des Schrittweitenfaktors nicht mehr vorgesehen, ein Korrekturbild auszuwerten oder insbesondere eine Faltung mit der Punktbildverwaschungsfunktion vorzunehmen. Somit ist das Verfahren weiter beschleunigt, da der Speicher- und Rechenaufwand geringer ist, denn aufwändige Prozesse fallen weg. Dennoch wird in den Durchläufen ein nicht-konstanter Schrittweitenfaktor verwendet, d.h. es ist gegenüber den nicht-beschleunigten Verfahren des Standes der Technik weiterhin die Anzahl an Durchläufen reduziert, die gegenüber den bekannten beschleunigten Verfahren nun schneller ausgeführt werden können.

Der Schrittweitenfaktor ist gemäß einer von der Durchlaufnummer abhängigen Funktion gewählt, die mit steigender Durchlaufnummer gegen Eins konvergiert. Diese Funktion ist stets positiv, d. h. liefert Werte größer Null, die aufgrund des Konvergenzverhaltens damit zwischen Null und Eins liegen. Die genaue Funktion kann experimentell überraschend einfach bestimmt werden, indem man in einem beschleunigten Verfahren gemäß dem Stand der Technik, beispielsweise von Biggs und Andrews oder von Schaefer et al., für mehrere experimentelle Probenbilder das Verhalten des Schrittweitenfaktors über den Iterationsprozess, d. h. über der Zahl der Durchläufe aufträgt und die erhaltende Kurve durch eine geeignete Funktion annähert. Auf diese Weise kann das Verhalten des Schrittweitenfaktors, das im Stand der Technik sich aus den umfangreichen Berechnungen und unter Rückgriff auf umfangreich abzuspeichernde Korrekturbilder ergibt, durch eine einfache Funktion nachgebildet werden. Eine mögliche Funktion ist beispielsweise k/(k+x), wobei k die Durchlaufnummer ist und x aus dem Intervall von Eins bis Fünf gewählt ist. In diesem Zusammenhang nimmt die Berechnungsschrittweite mit zunehmender Dauer des Iterationsprozesses ab. Auf diese Weise kann überraschend einfach das Verhalten der aufwendig zu berechnenden Berechnungsschrittweite im konjugierten Gradientenprozess oder im beschleunigten RL-Prozess nachgebildet wird, ohne dass aufwendige Berechnungen erforderlich sind. Die Nachbildung hat sich als besonders gut herausgestellt, wenn der Faktor x im Intervall [2,5; 3,5] liegt, besonders bevorzugt bei etwa 3. Eine andere Möglichkeit ist eine Exponentialfunktion, die von (-k) abhängt.

Im Fall des Iterationsprozesses mittels konjugierter Gradientenmethode, wie sie Schaefer et al. vorschlug, bezieht sich der Schrittweitenfaktor auf die Gradientenvektorlänge dar, entlang der man dem berechneten Gradientenvektor folgt, um den Startpunkt für die nächste Gradientenvektorberechnung zu finden. Hierbei gibt es Alternativen. In einer ersten Alternative wird für jeden Berechnungsschritt der konjugierten Gradientenmethode ein Gradientenvektor berechnet, und die Gradientenvektorlänge, entlang der dem berechneten Gradientenvektor gefolgt wird, wird nur für einige Durchläufe anhand der Korrekturbilddaten, beispielsweise durch Auswertung der Hesse'schen Matrix berechnet, und für andere Durchläufe, beispielsweise jeden zweiten Durchlauf, durch Anwendung des Schrittweitenfaktors auf die zuletzt unter Auswertung der Korrekturbilder ermittelte Gradientenvektorlänge. Der Schrittweitenfaktor schreibt damit die auf Basis der Korrekturbilddaten berechnete Gradientenvektorlänge fort. Der Gradientenvektor wird hingegen für jeden Durchlauf individuell berechnet, d. h. auch für diejenigen Durchläufe, in denen der durchlaufnummernbasierte Schrittweitenfaktor zur Anwendung kommt. In einer zweiten Alternative hierzu wird derjenige Gradientenvektor mit der Verwendung des Schrittweitenfaktors kombiniert, der sich bei der letzten Berechnung der Gradientenvektorlänge auf Basis des Korrekturbildes ergab. Somit wird nicht nur die Gradientenvektorlänge mit dem Schrittweitenfaktor fortgeschrieben, sondern es wird auch derselbe Gradientenvektor verwendet, wie zuvor bei der Berechnung auf Basis des Korrekturbildes. Das Verfahren konvergiert in der Regel dennoch, ist in beiden Alternativen aber deutlich beschleunigt, da nicht nur die Längenberechnung, entlang der dem Gradientenvektor gefolgt werden muss.

Im Fall des beschleunigten RL-Algorithmus, wie er beispielsweise von Biggs und Andrews beschrieben wurde, findet der Schrittweitenfaktor bei der Berechnung eines geschätzten Korrekturbildes Verwendung. In den Durchläufen wird jeweils eine Abfolge aus einem Schätzschritt, der mittels des Schrittweitenfaktors aus dem aktuellen Korrekturbild ein geschätztes Korrekturbild berechnet, und einem Faltungsschritt ausgeführt, der aus dem geschätzten Korrekturbild unter Verwendung der Punktbildverwaschungsfunktion das verbesserte Korrekturbild des aktuellen Durchlaufs berechnet. Ausgehend vom aktuellen Korrekturbild des jeweiligen Durchlaufs wird damit eine Korrekturbildänderung, die der Faltungsschritt des vorherigen Durchlaufs bewirkte, extrapoliert, bevorzugt linear. Hier kommt der Schrittweitenfaktor zur Anwendung, der die Änderung, welche der Faltungsschritt des vorherigen Durchlaufs bewirkte, fortschreibt. Bei einem Schrittweitenfaktor, der einen Wert zwischen Null und Eins hat, wird damit der Anteil festgelegt, um den die letzte Korrekturbildänderung extrapoliert wird. Mit anderen Worten, die Änderung, die im Faltungsschritt des vorherigen Durchlaufs ausgeführt wird, wird im Schätzschritt fortgeschrieben und extrapoliert, um die Basis für den nächsten Faltungsschritt zu gewinnen.

Für die Berechnung des Schrittweitenfaktors wird die Durchlaufnummer verwendet. Es ist kein Rückgriff auf vorherige Korrekturbilder nötig - auch benötigt man keine Faltungsoperationen oder den Rückgriff auf die Punktbildverwaschungsfunktion. Dies beschleunigt die bekannten beschleunigten Verfahren weiter.

Ein weiterer Vorteil wird beim beschleunigten RL-Algorithmus deswegen erhalten, weil die Schrittweitenfaktorberechnung, z. B. gemäß Gleichung (10) von Biggs und Andrews, auch zu negativen Schrittweitenfaktoren führen kann. Biggs und Andrews setzen in diesem Fall den Schrittweitenfaktor auf Null, wodurch nach der Aussage der Veröffentlichung der Beschleunigungsvorgang beendet ist und wieder neu von vorne loslaufen muss. Dies ist insbesondere bei verrauschten Bildern kritisch, da dieser Stopp und erneuter Beginn dann häufig auftreten kann. Das Verfahren ist zwar dadurch stabil, aber langsam. Die Berechnung des Schrittweitenfaktors ausgehend von der Durchlaufnummer kann nun sehr einfach sicherstellen, dass negative Schrittweitenfaktoren gar nicht anfallen können. Der Beschleunigungsprozess wird damit durchgehend ausgeführt, was das Verfahren weiter abkürzt, da nun auch die Zahl der Durchläufe reduziert ist.

Die Verwendung des k-basierten Schrittweitenfaktors wird bevorzugt abgewechselt mit einer Berechnung der Bildänderung auf Basis des letzten Korrekturbildes ausgeführt. Beim Optimierungsverfahren gemäß konjugierten Gradienten wird beispielsweise jeder m-te Schritt (m = 2, 3, 4, ...) mit der k-basierten Berechnung des Schrittweitenfaktors ausgeführt. Dadurch ist sichergestellt, dass in ausreichender Anzahl die Gradientenvektorlänge auf Basis des Korrekturbildes, z. B. unter Auswertung der Hesse'schen Matrix berechnet wird. Dies sichert eine gute Konvergenz des Verfahrens auch bei sehr verrauschten Bildern. Im beschleunigten RL-Ansatz erfolgt jede zweite Berechnung auf Basis der Korrekturbilder, wenn nach jedem Schätzschritt immer ein Faltungsschritt ausgeführt wird. Auch hier sind andere Häufigkeiten möglich, z. B. ein Schätzschritt alle 3, 4 oder 5 Faltungsschritte.

Das Verfahren kann sowohl an zweidimensionalen Probenbildern als auch an einem 3D-Stapel aus zweidimensionalen Probenbildern ausgeführt werden. Das Verfahren wird besonders bevorzugt an Probenbildern ausgeführt, die mittels Fluoreszenzmikroskopie aufgenommen wurden. Aber auch herkömmliche Hellfeldmikroskopiebilder können, wie es aus dem zitierten Stand der Technik bekannt ist, bearbeitet werden, wenn sie vorher durch Invertierung in Dunkelfeldbilder umgewandelt werden. Die Anwendung kann bei Weitfeldbildern verwendet werden, ist aber auch gleichermaßen bei Bildern möglich, die durch eine konfokale Abtastung, insbesondere mittels einer konfokalen Abtastung, die ein Beugungsbild der konfokalen Abbildung auflöst (sogenannte Airy-Scan-Mikroskopie), vorteilhaft.

Im Iterationsprozess wird in den Durchläufen jeweils aus einem zu Beginn des jeweiligen Durchlaufs vorliegenden aktuellen Korrekturbild ein verbessertes Korrekturbild berechnet. Dieses dient dann für den unmittelbar folgenden Durchlauf als aktuelles Korrekturbild. Wie in jedem Iterationsprozess unterscheidet sich der Start in Form eines ersten Durchlaufs von den folgenden Durchläufen, da Startbedingungen gesetzt werden müssen. Hierzu wird als aktuelles Korrekturbild das aufgenommene Probenbild verwendet.

Das Korrekturbild ist in Ausführungsformen bereits das auflösungsgesteigerte Probenbild. Alternativ ist es möglich, dass es eine entsprechende zweidimensionale, dem Probenbild entsprechende Anordnung von Korrekturfaktoren ist, mit denen die einzelnen Bildpunkte des Probenbildes hinsichtlich ihrer Intensität korrigiert werden.

Die Erfindung umfasst auch eine Vorrichtung und ein Softwareprogramm zur Ausführung des Verfahrens.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine Schemadarstellung eines Systems aus einem Mikroskop und einer Bildbearbeitungsvorrichtung,
- Fig. 2: ein Ablaufdiagramm für ein Verfahren zur Auflösungssteigerung, das von der Bildbearbeitungsvorrichtung der Figur 1 ausgeführt wird,
- Fig. 3: eine Detailansicht einer Iterationsschleife des Ablaufidagramms der Fig. 2,
- Fig. 4: eine Schemadarstellung zur Verdeutlichung der Wirkung der Iterationsschleife der Fig. 3 und
- Fig. 5: eine Detailansicht ähnlich der Fig. 3 für andere Ausführungsformen.

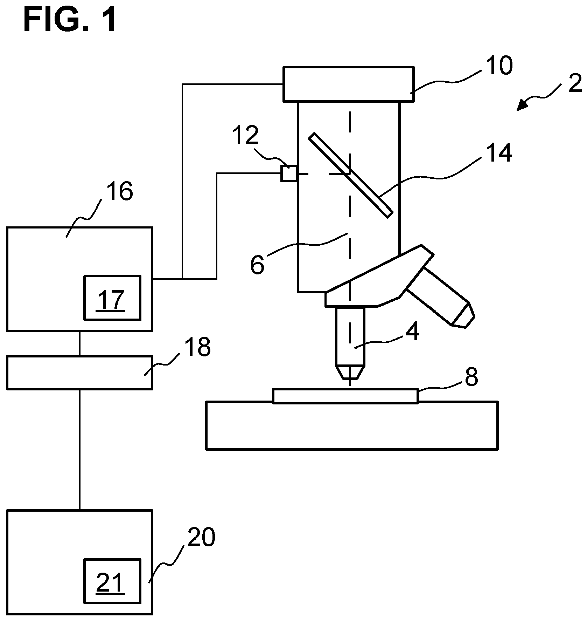

Figur 1 zeigt ein Mikroskop 2, das als herkömmliches Weitfeld-Fluoreszenzmikroskop ausgebildet ist und mittels eines Objektivs 4 durch einen Strahlengang 6 eine Probe 8 auf einen Detektor 10 abbildet. Hierbei kommt im exemplarischen Ausführungsbeispiel die Fluoreszenzmikroskopie zur Anwendung, so dass zusätzlich eine Lichtquelle 12 vorgesehen ist, welche über einen Strahlteiler 14, der als Farbteiler ausgebildet ist, Beleuchtungsstrahlung auf die Probe 8 richtet, die dort als Anregungsstrahlung wirkt und die Probe zur Fluoreszenz anregt. Die gegenüber der Beleuchtungsstrahlung rot verschobene Fluoreszenzstrahlung von der Probe 8 kann den Strahlteiler 14 passieren und gelangt so auf den Detektor 10. Dieser ist in seiner Pixelzahl so ausgestaltet, dass er gemäß dem Nyquist-Theorem mindestens eine zweifache Überabtastung bezogen auf die optische Auflösung, die das Mikroskop 2, insbesondere durch das Objektiv 4, aufweist, bewirkt. Der Detektor 10 sowie die Lichtquelle 12 sind über nicht weiter bezeichnete Steuerleitungen mit einem Steuergerät 16 verbunden, das den Betrieb des Mikroskops 2 steuert und insbesondere die Bilddaten vom Detektor 10 empfängt. Das Steuergerät 16 verfügt hierzu über einen Prozessor 17 und ist mit einem Bildspeicher 18 verbunden, in dem es die aufgenommenen Probenbilder, welcher der Detektor 10 liefert, ablegt.

Auf den Bildspeicher 18 hat weiter eine Bildverarbeitungsvorrichtung 20 Zugriff, die ebenfalls über einen Prozessor, hier den Prozessor 21, verfügt und die aufgenommenen Probenbilder verarbeitet, um höher aufgelöste Probenbilder zu erzeugen, die in der Auflösung über das Maß gesteigert sind, das in den aufgenommenen Probenbildern realisiert ist. Diese hochaufgelösten Probenbilder, welche von der Bildverarbeitungsvorrichtung 20 unter Steuerung durch ein entsprechendes Computerprogramm erzeugt werden, haben eine Ortsauflösung, die besser ist, als die optische Auflösung, welche in den Signalen des Detektors 10 unmittelbar realisiert wäre.

Natürlich kann die Bildverarbeitungsvorrichtung 20 auch in das Steuergerät 16 integriert bzw. durch dieses realisiert sein. Der nachfolgend beschriebene Fall mit einer separaten Bildverarbeitungsvorrichtung 20, die zusammen mit dem Mikroskop 2 ein Mikroskopiesystem bildet, hat den Vorteil, dass die Bildverarbeitung auch räumlich getrennt vom Mikroskop 2 ausgeführt werden kann. Eine Realisierung der Bildverarbeitungsvorrichtung im Steuergerät 16 bzw. durch das Steuergerät 16 und dessen Prozessor 17 hat den Vorteil, dass die Bildverbesserung bereits während des Mikroskopieprozesses durchgeführt werden kann, so dass ein Benutzer Parameter der mikroskopischen Bildaufnahme, beispielsweise eine Beleuchtungsintensität etc., optimal einstellen kann.

Soweit nachfolgend die Bildverarbeitung bzw. -auflösungssteigerung beschrieben wird, bezieht sich diese auf einen von möglicherweise mehreren Fluoreszenzkanälen. Ein Mikroskop 2, das in der Probe 8 entsprechend mehrere verschiedene Fluoreszenzprozesse in unterschiedlichen Spektralbereichen, den sogenannten Fluoreszenzkanälen, anregt, kann gleichermaßen von der hier beschriebenen Bildverarbeitung profitieren, die dann in den entsprechenden Fluoreszenzkanälen, d. h. für verschiedene Farben der jeweils individuell nach Fluoreszenzkanälen getrennt anfallenden aufgenommenen Probenbilder durchgeführt werden.

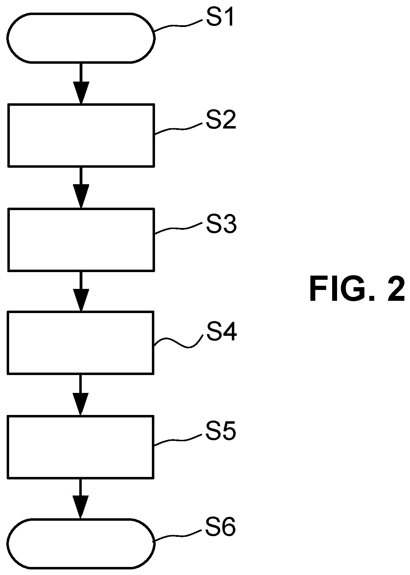

Figur 2 zeigt ein Ablaufdiagramm für ein Verfahren zur Auflösungssteigerung, das von der Bildverarbeitungseinrichtung 20 (ersatzweise vom Steuergerät 16) ausgeführt wird. In einem Schritt S1, wird das Verfahren gestartet. Anschließend wird in einem Schritt S2 ein aufgenommenes Probenbild bereitgestellt, das mit dem Mikroskop 2 erzeugt wurde.

In einem Schritt S3 wird eine Punktbildverwaschungsfunktion bereitgestellt, die ein Abbildungsverhalten des Mikroskops 2 kennzeichnet.

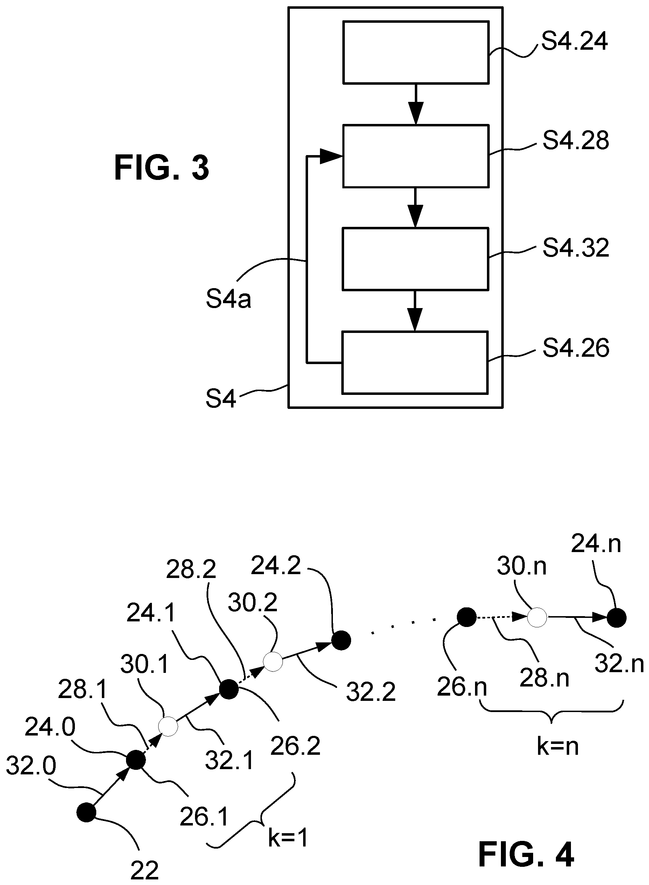

Dann wird in einem Iterationsprozess S4 aus dem aufgenommenen Probenbild ein auflösungsgesteigertes Probenbild berechnet, wobei im Iterationsprozess eine Iterationsschleife wiederholt durchlaufen wird, die im Detail in Figur 3 gezeigt ist. Nach Abschluss des Iterationsprozesses S4 liegt ein Korrekturbild vor, das im Schritt S5 als auflösungsgesteigertes Probenbild im Bildspeicher 18 abgelegt wird. Es ist bereits das auflösungsgesteigerte Probenbild oder stellt die Basis dafür dar (s. o.). Im Schritt S6 ist das Verfahren dann beendet.

Der Iterationsprozess S4 kann auf verschiedene Art und Weise ausgestaltet werden, denen aber sämtlich gemein ist, dass sie einen Schrittweitenfaktor aufweisen, der nur von der Durchlaufnummer des jeweiligen Durchlaufs durch eine Iterationsschleife S4a, welcher dem Iterationsprozess S4 zugrunde liegt, abhängt.

Eine erste Ausführungsform des Iterationsprozesses S4 verwendet den Ansatz, den Biggs und Andrews in der eingangs genannten Veröffentlichung beschrieben. Diese Veröffentlichung wird in dieser Hinsicht vollumfänglich in diese Anmeldung einbezogen. Das dabei zugrunde liegende Prinzip ist in Figur 4 veranschaulicht. Figur 4 zeigt schematisch die Änderung der Intensität eines beliebigen Bildpunktes bei der Optimierung des Korrekturbildes. Die Darstellung der Figur 4 bezieht sich nur exemplarisch auf einen Bildpunkt. Tatsächlich wird der entsprechende Vorgang für alle Bildpunkte des Bildes ausgeführt, was die Verwendung des Begriffes "Korrekturbild" rechtfertigt.

Ausgefüllte Kreise in Figur 4 beziehen sich auf ein z. B. mittels maximum-likelihood-Optimierung berechnetes Korrekturbild, nicht ausgefüllte Kreise auf ein geschätztes Korrekturbild. Mit einem Punkt angefügte Zahlen in den Bezugszeichen der Figur 4 beziehen sich auf eine Durchlaufnummer der Iterationsschleife der Figur 3, und die in Figur 3 mit einem Punkt angefügten Zahlen beziehen sich auf die entsprechenden Zahlen in den Bezugszeichen der Figur 4.

Die Bezugszeichen in den Figuren 3 stehen dabei für folgendes:

| | |
|---|---|
| S4.24 | Startschritt des Iterationsschrittes S4; |
| S4.28 | Schätzschritt eines Durchlaufs durch die Iterationsschleife des Iterationsschrittes S4; |
| S4.32 | Faltungsschritt eines Durchlaufs, wobei die Faltungsoperation der des Startschrittes S4.24 entspricht; |
| S4.26 | Bereitstellen eines verbesserten Korrekturbilds, welches das Ergebnis der vorherigen Ausführung des Schrittes S4.32 ist. |

In Figur 4 bezeichnen, wie bereits erwähnt, die mit Punkt angefügten Zahlen die Durchlaufnummer k. Dabei bezeichnen die Bezugszeichen:

| | |
|---|---|
| 24.k | ein verbessertes Korrekturbild enthalten durch den Faltungsschritt S4.32 im k-ten Durchlauf; |
| 26.k | ein aktuelles Korrekturbild zu Beginn des k-ten Durchlaufs durch den Schätzschritt S4.28; |
| 28.k | einen Pfeil zur Symbolisierung der Wirkung des Schätzschrittes S4.28 im Sinne einer Veränderung des aktuellen Korrekturbildes 26.k zum geschätzten Korrekturbild 30.k; |
| 32.k | einen Pfeil zur Symbolisierung der Wirkung des Faltungsschritts S4.32 im Sinne einer Veränderung hin zum verbesserten Korrekturbild 26.k. |

Der Iterationsprozess gemäß dem Ausführungsbeispiel der Figuren 3 und 4 berechnet der Startschritt S4.24, der die Durchlaufnummer k = 0 hat, ausgehend vom aufgenommenen Probenbild 22 in einem Faltungsschritt entsprechend dem Pfeil 32.0 ein verbessertes Korrekturbild 24.0. Der Faltungsschritt verwendet z. B. den maximum-likelihood-basierten RL-Algorithmus, wie er in Gleichung (2) der Veröffentlichung von Biggs und Andrews niedergelegt ist. Biggs und Andrews weisen darauf hin, dass es auch andere Optimierungskriterien gibt, z. B. auf Basis der Entropiemaximierung oder mittels Gerchberg-Saxton-Algorithmus. Solche Varianten sind hier gleichermaßen möglich. Wesentlich ist es nur, dass der Faltungsschritt eine Optimierung des Korrekturbildes unter Verwendung der PSF vornimmt. Unter Optimierung ist dabei die erwähnte Verringerung des Unterschieds zwischen dem Korrekturbild, gefaltet mit der PSF und verrauscht, und dem aufgenommenen Probenbild gemäß dem gewählten Kriterium (z. B. maximum likelihood, Entropie, Gerchberg-Saxton-Algorithmus) zu verstehen.

In einem nächsten Durchlauf (k = 1) beginnt die Iterationsschleife S4a des Iterationsprozesses S4. Hier wird nun das Ergebnis des Startdurchlaufs S4.24, also das verbesserte Korrekturbild 24.0, als aktuelles Korrekturbild 26.1 verwendet. Es wird dem Schätzschritt S4.28 unterworfen, der die Änderung, welche der vorherige Faltungsschritt bewirkte, extrapoliert, z. B. linear. Diese Änderung ist durch Richtung und Länge des Pfeils 32.0 veranschaulicht. Der Schätzschritt S4.28 erzeugt damit ein geschätztes Korrekturbild 30.1.

Ein Schrittweitenfaktor, der eine Extrapolationsreichweite, nämlich die Länge des Pfeils 28.1 definiert, ergibt sich dabei z. B. mittels der Formel k/(k+3). Sie beschreibt den Anteil an der Änderung gemäß Pfeil 32.0, der zur Extrapolation verwendet wird, und ersetzt Gleichung (10) von Biggs und Andrews. Hier weicht also die Ausführungsform vom Vorgehen von Biggs und Andrews ab, die in Gleichung (10) sehr viel komplexer den Schrittweitenfaktor berechneten und den Wert von k dabei nicht berücksichtigten. Der Schrittweitenfaktor beträgt nun im Durchlauf k = 1 ein Viertel der Reichweite des vorherigen Faltungsschritts.

Gemäß dem beschleunigten RL-Algorithmus wird mit dem Schrittweitenfaktor der Unterschied multipliziert, der beim letzten Faltungsschritt bewirkt wurde. Der Schrittweitenfaktor definiert also nicht für sich alleine die Änderung des Schätzschrittes S.28, sondern einen Vorfaktor, der multiplikativ mit der Änderung des letzten Faltungsschritts im vorherigen Durchlauf bewirkt wurde.

Dann wird aus dem geschätzten Korrekturbild 30.1 mit dem Faltungsschritt S4.32, der in Figur 4 als Pfeil 32.1 symbolisiert ist, ein verbessertes Korrekturbild 24.1 berechnet. Der Faltungsschritt gemäß Pfeil 32.1 entspricht von der Rechenoperation her dem Faltungsschritt gemäß Pfeil 32.0, allerdings auf Grund der iterativen Optimierung auf Basis anderer Bildinformation (aufgenommenes Probenbild bei 32.0, geschätztes Korrekturbild bei 32.1). Beide folgen dem herkömmlichen RL-Algorithmus (z. B. Gleichung (2) der Veröffentlichung von Biggs und Andrews).

Das verbesserte Korrekturbild 24.1 wird dann im Schritt S4.26 bereitgestellt, so dass es im nächsten Durchlauf (k = 2) als aktuelles Korrekturbild 26.2 verwendet werden kann. Die Iterationsschleife S4a springt damit zum Schritt S4.28 zurück, der nun für den folgenden Durchlauf (k = 2) ausgeführt wird. In diesem werden gemäß der Schemadarstellung der Figur 4 nun ein geschätztes Korrekturbild 30.2 berechnet (Schätzschritt S4.28). Der verwendete Schrittweitenfaktor ist nun gemäß der Formel k/(k+3) bereits 0,4. Es wird also 40 % des Unterschieds, den der vorherige Faltungsschritt gemäß Pfeil 32.1 bewirkte, im Schätzschritt verwendet. Auf Basis des derart erhaltenen, geschätzten Korrekturbildes 30.2 wird nun mit dem Faltungsschritt S4.32 ein verbessertes Korrekturbild 24.2 berechnet und im Schritt S4.26 bereitgestellt, so dass es im nächsten Durchlauf als aktuelles Korrekturbild 26.3 im Schritt S4.28 eingelesen werden kann. Dieser Durchlauf setzt sich dann fort. Es wird ein geschätztes Korrekturbild 30.3 und daraus ein verbessertes Korrekturbild 24.3 errechnet. Der Prozess führt n Durchläufe aus. Abbruchkriterien sind im Stand der Technik bekannt.

Der Schrittweitenfaktor gemäß Pfeil 28.1 ... 28.n des Schätzschrittes S4.28 hängt, wie bereits erwähnt, nur von der Durchlaufnummer ab. Mit steigender Durchlaufnummer konvergiert er gegen Eins. Da der Schrittweitenfaktor gemäß Gleichung (6) der Publikation von Biggs und Andrews ein Vorfaktor vor dem Unterschied 32.k, der beim vorherigen Faltungsprozess gemäß RL-Algorithmus erzeugt wurde, ist, nähert sich die Länge des Pfeils 28.k mit laufendem Verfahren an die Länge des Pfeils 32.(k-1) an, der den vorherigen Faltungsschritt S4.32 symbolisiert.

Die Ausführung des Iterationsprozesses S4 mit einem Schrittweitenfaktor, der die Extrapolationsweite z. B. gemäß Biggs und Andrews festlegt, ist jedoch nicht die einzige Realisierungsmöglichkeit. Gleichermaßen kann der Iterationsprozess S4 auch gemäß dem konjugierten Gradientenprozess z. B. von Schaefer et al. ausgeführt werden. Hier wird die Berechnung der Hesse'schen Matrix in einigen Durchläufen, z. B. jedem zweiten Durchlauf, durch eine Funktion, die von der Durchlaufnummer abhängt und mit der letzten unter Berechnung der Hesse'schen Matrix berechneten Gradientenvektorlänge multipliziert wird, ersetzt. Die Berechnung der Gleichung (13) der Veröffentlichung von Schaefer et al. ist damit in einem Teil der Durchläufe durch eine drastisch einfachere Berechnung ersetzt. Diese Publikation ist hiermit ebenfalls inhaltlich eingebunden.

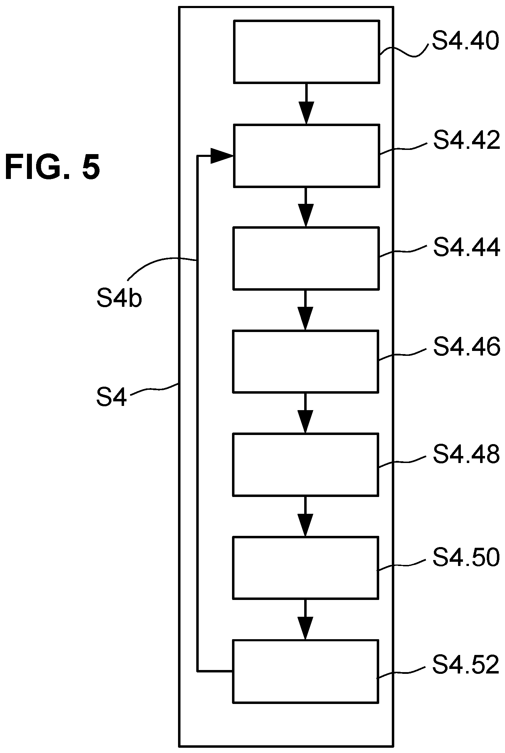

Figur 5 zeigt hierzu in einem Ablaufdiagramm den Iterationsprozess S4 der Figur 2 für eine zweite Ausführungsform. In einem Startdurchlauf gemäß Schritt S4.40 wird mit der Methode konjugierter Gradienten ein erstes Korrekturbild berechnet. Dazu erfolgt eine Berechnung eines Gradientenvektors, was im Ansatz gemäß Schaefer et al. zwei Faltungsoperationen mit der PSF erfordert, sowie eine Berechnung einer Gradientenvektorlänge, was gemäß dem Gleichungssystem von Schaefer et al. die Berechnung einer Hesse'schen Matrix und damit zwei weitere Faltungsoperationen mit der PSF benötigt. Im Ergebnis des Startschrittes S4.40 steht ein erstes Korrekturbild. Dieses wird nun in einer Iterationsschleife S4b verbessert. Dazu wird in einem Schritt S4.42 zuerst erneut ein Gradientenvektor berechnet und im Schritt S4.44 eine Gradientenvektorlänge. Letztere wird wieder unter Auswertung der Hesse'schen Matrix ermittelt. In einem Schritt S4.46 wird aus dem Gradientenvektor gemäß Schritt S4.42 und der Gradientenvektorlänge, die auf Basis des Korrekturbildes ermittelt wurde (Anwendung der Hesse'schen Matrix-Berechnung), ein verbessertes Korrekturbild berechnet.

Im nun folgenden Schritt S4.48 wird für dieses verbesserte Korrekturbild wieder ein Gradientenvektor berechnet. Im Schritt S4.50 findet eine Berechnung einer Gradientenvektorlänge statt, wobei nun allerdings ein Schrittweitenfaktor verwendet wird, mit dem die Gradientenvektorlänge des Schrittes S4.44 multipliziert wird. Es findet also im Schritt S4.50 keine Auswertung eines Korrekturbilds zur Ermittlung der Gradientenvektorlänge statt. Vielmehr wird die Gradientenvektorlänge, welche schon zuvor auf Basis des Korrekturbildes erhalten wurde, um den Schrittweitenfaktor fortgeschrieben. Der Schrittweitenfaktor basiert ausschließlich auf der Durchlaufnummer, ist also k-basiert. Er folgt einer Funktion, welche die Änderung der Gradientenvektorlänge im Verfahren der konjugierten Gradienten möglichst gut nachbildet. Es ist eine Funktion, die gegen Eins konvergiert.

Basierend auf diesem k-basierten Schrittweitenfaktor, der Gradientenvektorlänge des Schrittes S4.44 und dem Gradientenvektor des Schrittes S4.48 wird nun ein weiteres verbessertes Korrekturbild im Schritt S4.52 berechnet, das dann den Ausgangspunkt für den Rücksprung in der Iterationsschleife S4b bildet und im nächsten Durchlauf des Schrittes S4.42 verwendet wird, um den Gradientenvektor zu berechnen, sowie in der nächsten Ausführung des Schrittes S4.44 verwendet wird, um die Gradientenvektorlänge aus dem Korrekturbild zu ermitteln.

In der Darstellungsform der Figur 5 wird der Schrittweitenfaktor im Schritt S4.50 bei jeder zweiten Berechnung eines Korrekturbildes verwendet. Diese Aufteilung 1:1 ist natürlich optional. Gleichermaßen ist es möglich, andere Aufteilungen, z. B. 1:2, 1:3 usw. oder 2:1, 3:1 usw. oder 2:3, 3:2 etc. zu verwenden, zu steigern oder zu verringern. Das Schaltbild der Figur 5 ändert sich dann entsprechend.

In einer dritten Ausführungsform ist der Schritt S4.48, in dem ein Gradientenvektor berechnet wird, ersetzt durch die Verwendung des Gradientenvektors, der im Schritt S4.42 berechnet worden war. Dann wird in den Schritten S4.48 und S4.50 nicht nur die Gradientenvektorlänge aus Schritt S4.44 k-basiert fortgeschrieben, es wird auch der Gradientenvektor aus Schritt S4.42 verwendet, für den die Gradientenvektorlänge, welche nun fortgeschrieben wird, ursprünglich ermittelt worden war. Hierdurch wird eine weitere Abkürzung des Verfahrens erreicht.

## Patentansprüche

1. Verfahren zur Auflösungssteigerung in der Mikroskopie, das aufweist:
- Bereitstellen mind. eines aufgenommenen Probenbildes (22), das mit einem Mikroskop (2) erzeugt wurde,
- Bereitstellen einer Punktbildverwaschungsfunktion, die ein Abbildungsverhalten des Mikroskops (2) kennzeichnet, und
- Berechnen eines auflösungsgesteigerten Probenbildes aus dem aufgenommenen Probenbild (22),
- wobei das Berechnen in einem eine Iterationsschleife (S4a; S4b) wiederholt durchlaufenden Iterationsprozess (S4) erfolgt, der aus dem aufgenommenen Probenbild (22) unter Verwendung der Punktbildverwaschungsfunktion ein Korrekturbild (24.0 - 24.n) ermittelt, wobei im Iterationsprozess (S4) ein Unterschied zwischen dem mit der Punktbildverwaschungsfunktion gefalteten Korrekturbild und dem aufgenommenen Probenbild (22) minimiert wird, und
- wobei im Iterationsprozess (S4) die Durchläufe durch die Iterationsschleife (S4a; S4b) mit einer aufsteigenden Durchlaufnummer (k) nummeriert sind und in mindestens einigen der Durchläufe ein Schrittweitenfaktor verwendet wird, der von der Durchlaufnummer (k) des jeweiligen Durchlaufs abhängt und ohne Rückgriff auf Korrekturbilder ermittelt wird,
- wobei der Schrittweitenfaktor in der Iterationsschleife mit einer Änderung, die in einem früheren Durchlauf durch die Iterationsschleife und unter Auswertung eines früher ermittelten Korrekturbildes oder einer früher dazu berechneten Größe errechnet wurde, multipliziert wird und eine Festschreibung definiert, zu welchem Anteil die Änderung fortgeschrieben wird, wobei der Schrittweitenfaktor gemäß einer von der Durchlaufnummer (k) abhängenden, stets positiven Funktion gewählt wird, die mit steigender Durchlaufnummer (k) gegen Eins konvergiert.

2. Verfahren nach Anspruch 1, wobei die Funktion k/(k+x) lautet, wobei k die Durchlaufnummer ist und x aus dem Intervall von Eins bis Fünf gewählt ist.

3. Verfahren nach Anspruch 1, wobei die Funktion eine Exponentialfunktion von -k enthält, wobei k die Durchlaufnummer ist.

4. Verfahren nach einem der obigen Ansprüche, wobei Durchläufe, in denen der Schrittweitenfaktors verwendet wird, abgewechselt werden mit Durchläufen mit einer Berechnung einer Bildänderung auf Basis des letzten Korrekturbildes und jeder m-te Durchlauf (m = 2, 3, 4, ...) mit der k-basierten Berechnung des Schrittweitenfaktors ausgeführt wird.

5. Verfahren nach einem der obigen Ansprüche, wobei der Iterationsprozess eine konjugierte Gradientenmethode ausführt und der Schrittweitenfaktor sich auf eine in einem vorherigen Durchlauf berechnete Gradientenvektorlänge bezieht.

6. Verfahren nach einem der obigen Ansprüche, wobei
- der Iterationsprozess (S4) einen Richardson-Lucy-Algorithmus ausführt,
- in jedem Durchlauf aus einem aktuellen Korrekturbild (26.1 - 26.n) ein verbesserte Korrekturbild (30.1 - 30.n) ermittelt wird, das dann als aktuelles aktuellen Korrekturbild (26.1 - 26.n) des nächsten Durchlaufs dient, und
- mind. einige Durchläufe durch die Iterationsschleife (S4b) jeweils eine Abfolge aus einem Schätzschritt (S4.28), der mittels dem Schrittweitenfaktor aus dem aktuellen Korrekturbild (26.1
- 26.n) des jeweiligen Durchlaufs ein geschätztes Korrekturbild (30.1 - 30.n) berechnet, und einem Faltungsschritt (S4.32), der aus dem geschätzten Korrekturbild (30.1 - 30.n) unter Verwendung der Punktbildverwaschungsfunktion das verbesserte Korrekturbild (24.1 - 24.n) des jeweiligen Durchlaufs berechnet, umfassen.

7. Verfahren zur Auflösungssteigerung nach Anspruch 6, wobei im Schätzschritt (S4.28) das geschätzte Korrekturbild (30.1 - 30.n) berechnet wird, indem ausgehend vom aktuellen Korrekturbild (26.1 - 26.n) des jeweiligen k-ten Durchlaufs ohne Verwendung der Punktbildverwaschungsfunktion eine Korrekturbildänderung (32.0 - 32.n), die der Faltungsschritt (S4.32) des vorherigen (k-1)-ten Durchlaufs bewirkte, extrapoliert wird, wobei der Schrittweitenfaktor eine Extrapolationsweite des Schätzschrittes (S4.28) definiert.

8. Vorrichtung zur Auflösungssteigerung bei einem aufgenommenen Probenbild, das von einem Mikroskop aufgenommen ist, wobei die Vorrichtung eine Bildbearbeitungseinrichtung (20) aufweist, die einen Prozessor (21) umfasst und zur Ausführung des Verfahrens nach einem der Ansprüche 1 bis 7 konfiguriert ist.

9. Softwareprogramm umfassend Befehle, die bei der Ausführung des Programms durch einen Computer diesen veranlassen, das Verfahren nach einem der Ansprüche 1 bis 7 auszuführen.

## Claims

1. Method for increasing resolution in microscopy, comprising:
- providing at least one recorded sample image (22) which was generated by means of a microscope (2),
- providing a point spread function which characterizes an imaging behaviour of the microscope (2), and
- calculating a sample image with increased resolution from the recorded sample image (22),
- wherein the calculating is effected in an iteration process (S4) which repeatedly passes through an iteration loop (S4a; S4b) and which determines a correction image (24.0 - 24.n) from the recorded sample image (22) using the point spread function, wherein a difference between the correction image convolved with the point spread function and the recorded sample image (22) is minimized in the iteration process (S4), and
- wherein in the iteration process (S4) the passes through the iteration loop (S4a; S4b) are numbered with an ascending pass number (k) and, in at least some of the passes, a step size factor is used which is dependent on the pass number (k) of the respective pass and is determined without recourse to correction images,
- wherein in the iteration loop the step size factor is multiplied by a change that was calculated in an earlier pass through the iteration loop and by evaluating an earlier determined correction image or an earlier calculated variable for such correction image, and defines to which extend the change is carried forward, wherein the step size factor is chosen in accordance with an always positive function which is dependent on the pass number (k) and which converges towards one as the pass number (k) rises.

2. Method according to claim 1, wherein the function reads k/(k+x), wherein k is the pass number and x is chosen from the interval of one to five.

3. Method according to claim 1, wherein the function contains an exponential function of -k, wherein k is the pass number.

4. Method according to one of the above claims, wherein passes in which the step size factor is used are alternated with passes in which an image change is calculated based on the last correction image, and every m-th pass (m = 2, 3, 4, ...) is performed with the k-based calculation of the step size factor.

5. Method according to any of the preceding claims, wherein the iteration process carries out a conjugate gradient method and the step size factor relates to a gradient vector length calculated in a previous pass.

6. Method according to any of the preceding claims, wherein
- the iteration process (S4) executes a Richardson-Lucy algorithm,
- an improved correction image (30.1 - 30.n) is determined from a current correction image (26.1 - 26.n) in each pass, and then serves as current correction image (26.1 - 26.n) of the next pass, and
- at least some passes through the iteration loop (S4b) each comprise a sequence of an estimation step (S4.28), which calculates an estimated correction image (30.1 - 30.n) from the current correction image (26.1 - 26.n) of the respective pass by means of the step size factor, and a convolution step (S4.32), which calculates the improved correction image (24.1 - 24.n) of the respective pass from the estimated correction image (30.1 - 30.n) using the point spread function.

7. Method for increasing resolution according to claim 6, wherein in the estimation step (S4.28) the estimated correction image (30.1 - 30.n) is calculated by a procedure in which, proceeding from the current correction image (26.1 - 26.n) of the respective k-th pass, without using the point spread function, a correction image change (32.0 - 32.n) brought about by the convolution step (S4.32) of the previous (k-1)-th pass is extrapolated, wherein the step size factor defines an extrapolation size of the estimation step (S4.28).

8. Apparatus for increasing resolution for a recorded sample image recorded by a microscope, wherein the apparatus comprises an image processing device (20) which comprises a processor (21) and is configured for carrying out the method according to any of claims 1 to 7.

9. Software program comprising instructions which, when the program is executed by a computer, cause the latter to carry out the method according to any of claims 1 to 7.

## Revendications

1. Procédé d'augmentation de la résolution en microscopie, qui comprend :
- la mise à disposition d'au moins une image d'échantillon acquise (22), qui a été générée à l'aide d'un microscope (2),
- la mise à disposition d'une fonction d'étalement du point, qui caractérise un comportement de formation d'image du microscope (2), et
- le calcul d'une image d'échantillon à résolution augmentée à partir de l'image d'échantillon acquise (22),
- le calcul étant effectué dans un processus d'itération (S4) qui exécute de manière répétée une boucle d'itération (S4a ; S4b), lequel processus d'itération détermine une image de correction (24.0 - 24.n) à partir de l'image d'échantillon acquise (22) en utilisant la fonction d'étalement du point, une différence entre l'image de correction convoluée avec la fonction d'étalement du point et l'image d'échantillon acquise (22) étant rendue minimale dans le processus d'itération (S4), et
- dans le processus d'itération (S4), les itérations de la boucle d'itération (S4a ; S4b) étant numérotées avec un numéro d'itération croissant (k) et dans au moins certaines des itérations, un facteur de pas étant utilisé, lequel dépend du numéro d'itération (k) de l'itération respective et étant déterminé sans recourir à des images de correction,
- le facteur de pas dans la boucle d'itération étant multiplié par une modification qui a été calculée lors d'une itération antérieure de la boucle d'itération et en évaluant une image de correction déterminée antérieurement ou une grandeur calculée antérieurement à cet effet, et définit une consigne indiquant la proportion selon laquelle la modification est reportée, le facteur de pas étant choisi selon une fonction toujours positive dépendant du numéro d'itération (k) et convergeant vers un lorsque le numéro d'itération (k) augmente.

2. Procédé selon la revendication 1, dans lequel la fonction est k/(k+x), k étant le numéro d'itération et x étant choisi dans l'intervalle de un à cinq.

3. Procédé selon la revendication 1, dans lequel la fonction contient une fonction exponentielle de -k, k étant le numéro d'itération.

4. Procédé selon l'une des revendications précédentes, dans lequel les itérations dans lesquelles le facteur de pas est utilisé sont alternées avec des itérations comprenant le calcul d'une modification d'image sur la base de la dernière image de correction, et chaque m-ième itération (m = 2, 3, 4, ...) est exécutée avec le calcul du facteur de pas basé sur k**.**

5. Procédé selon l'une des revendications précédentes, dans lequel le processus d'itération exécute une méthode du gradient conjuguée et le facteur de pas se rapporte à une longueur de vecteur de gradient calculée lors d'une itération précédente.

6. Procédé selon l'une des revendications précédentes, dans lequel :
- le processus d'itération (S4) exécute un algorithme de Richardson-Lucy,
- lors de chaque itération, une image corrigée améliorée (30.1 - 30.n) est déterminée à partir d'une image corrigée actuelle (26.1 - 26.n), qui sert ensuite d'image corrigée actuelle (26.1 - 26.n) pour l'itération suivante, et
- au moins certaines itérations de la boucle d'itération (S4b) comprennent chacune une séquence d'une étape d'estimation (S4.28), qui calcule une image de correction estimée (30.1 - 30.n) à partir de l'image de correction actuelle (26.1 - 26.n) de l'itération respective au moyen du facteur de pas, et d'une étape de convolution (S4.32), qui calcule l'image de correction améliorée (24.1 - 24.n) de l'itération respective à partir de l'image de correction estimée (30.1 - 30.n) en utilisant la fonction d'étalement du point.

7. Procédé d'augmentation de la résolution selon la revendication 6, dans lequel, lors de l'étape d'estimation (S4.28), l'image de correction estimée (30.1 - 30.n) est calculée à partir de l'image de correction actuelle (26.1 - 26.n) de la k-ème itération respective, et en extrapolant, sans utiliser la fonction d'étalement du point, une modification d'image de correction (32.0 - 32.n) qui a été provoquée par l'étape de convolution (S4.32) de la (k-1)-ème itération précédente, le facteur de pas définissant une amplitude d'extrapolation de l'étape d'estimation (S4.28).

8. Dispositif d'augmentation de la résolution d'une image d'échantillon acquise, qui est acquise par un microscope, le dispositif comprenant un équipement de traitement d'image (20) qui comprend un processeur (21) et qui est configuré pour mettre en œuvre le procédé selon l'une des revendications 1 à 7.

9. Produit de programme d'ordinateur comprenant des instructions qui, lors de l'exécution du programme par un ordinateur, amènent celui-ci à mettre en œuvre le procédé selon l'une des revendications 1 à 7.
